# EUROPÄISCHE PATENTSCHRIFT

(11) **EP 3 036 114 B1**
(45) Veröffentlichungstag und Bekanntmachung des Hinweises auf die Patenterteilung: **09.08.2023**
(21) Anmeldenummer: 14736327.9
(22) Anmeldetag: 24.06.2014
(51) Int. Cl.: B29B 7/74, B60C 1/00, C08K 3/36, C08K 5/5425, C08K 13/02, C08L 25/10, C08L 21/00

(54) **SCHWEFELVERNETZBARE KAUTSCHUKMISCHUNG**
SULFUR-CROSSLINKABLE RUBBER MIXTURE
MÉLANGE DE CAOUTCHOUC POUVANT ÊTRE RÉTICULÉ AU SOUFRE

(30) Priorität: 19.08.2013 DE 102013108937
(43) Veröffentlichungstag der Anmeldung: 29.06.2016
(73) Patentinhaber: Continental Reifen Deutschland GmbH, 30165 Hannover (DE)
(72) Erfinder: SCHWEKENDIEK, Kirsten, 30167 Hannover (DE); RECKER, Carla, 30167 Hannover (DE); MÜLLER, Norbert, 29336 Nienhagen (DE)
(74) Vertreter: Continental Corporation
(86) Internationale Anmeldenummer: PCT/EP2014/063224
(87) Internationale Veröffentlichungsnummer: WO 2015/024687

(56) Entgegenhaltungen:
- EP-A1- 0 845 493
- WO-A1-2010/125124
- DE-A1- 2 536 674

## Beschreibung

Die Erfindung betrifft eine schwefelvernetzbare Kautschukmischung, insbesondere für Laufstreifen von Fahrzeugluftreifen, und einen Fahrzeugreifen.

Die Kautschukzusammensetzung des Laufstreifens bestimmt in hohem Maße die Fahreigenschaften eines Fahrzeugreifens, insbesondere eines Fahrzeugluftreifens. Unter dem Begriff Fahrzeugreifen werden in der vorliegenden Schrift Fahrzeugluftreifen, Vollgummireifen und Zweiradreifen verstanden.

Ebenso sind die Kautschukmischungen, die in Riemen, Schläuchen und Gurten Verwendung vor allem in den mechanisch stark belasteten Stellen finden, für Stabilität und Langlebigkeit dieser Gummiartikel im Wesentlichen verantwortlich. Daher werden an diese Kautschukmischungen für Fahrzeugluftreifen, Gurte, Riemen und Schläuche sehr hohe Anforderungen gestellt.

Es bestehen Zielkonflikte zwischen den meisten der bekannten Reifeneigenschaften wie Nassgriffverhalten, Trockenbremsen, Handling-Verhalten, Rollwiderstand, Wintereigenschaften, Abriebverhalten und Reißeigenschaften.

Insbesondere bei Fahrzeugluftreifen wurden vielfältige Versuche unternommen, die Eigenschaften des Reifens durch die Variation der Polymerkomponenten, der Füllstoffe und der sonstigen Zuschlagstoffe vor allem in der Laufstreifenmischung positiv zu beeinflussen.

Dabei muss man berücksichtigen, dass eine Verbesserung in der einen Reifeneigenschaft oft eine Verschlechterung einer anderen Eigenschaft mit sich bringt.

In einem gegebenen Mischungssystem existieren zum Beispiel verschiedene, bekannte Möglichkeiten das Handling-Verhalten zu optimieren, in dem die Steifigkeit der Kautschukmischung erhöht wird. Zu erwähnen sind hier z.B. eine Erhöhung des Füllgrades und die Erhöhung der Netzknotendichte der vulkanisierten Kautschukmischung. Während ein erhöhter Füllstoffanteil Nachteile im Rollwiderstand mit sich bringt, führt die Anhebung des Netzwerkes zu einer Verschlechterung in den Reißeigenschaften sowie der Nassgriffindikatoren der Kautschukmischung.

Es ist außerdem bekannt, dass Kautschukmischungen, insbesondere für den Laufstreifen von Fahrzeugluftreifen, Kieselsäure als Füllstoff enthalten können. Zudem ist bekannt, dass sich Vorteile hinsichtlich des Rollwiderstandsverhaltens und der Prozessierbarkeit der Kautschukmischung ergeben, wenn die Kieselsäure mittels Silan-Kupplungsagenzien an das oder die Polymer(e) angebunden ist.

Im Stand der Technik bekannte Silan-Kupplungsagenzien gehen beispielsweise aus der EP 0845493 A1, der DE 2536674 B2 und der DE 2255577 C3 hervor.

Der vorliegenden Erfindung liegt nun die Aufgabe zugrunde, eine Kautschukmischung bereitzustellen, die im Vergleich zum Stand der Technik eine höhere Steifigkeit und gleichzeitig eine weitere Verbesserung im Zielkonflikt zwischen Rollwiderstand und Nassgriff aufweist. Dabei soll die Prozessierbarkeit der Kautschukmischung nicht nachteilig beeinträchtigt werden.

Gelöst wird diese Aufgabe durch eine Kautschukmischung, die die folgenden Bestandteile enthält:
- wenigstens einen Dienkautschuk, wobei sie wenigstens einen lösungspolymerisierten Styrol-Butadien-Kautschuk enthält; und
- 10 bis 200 phr wenigstens einer Kieselsäure und
- 2 bis 20 phf wenigstens eines Silans mit der allgemeinen Summenformel I) [(R¹)₃Si-X]ₘSₙ(R²)₂₋ₘ , wobei die Reste R¹ innerhalb eines Moleküls gleich oder verschieden sein können und Alkoxy-Gruppen mit 1 bis 10 Kohlenstoffatomen oder zyklische Dialkoxy-Gruppen mit 2 bis 10 Kohlenstoffatomen oder Cycloalkoxygruppen mit 4 bis 10 Kohlenstoffatomen oder Phenoxygruppen oder Halogenide sind und wobei m den Wert 1 oder 2 annimmt und wobei n eine ganze Zahl von 1 bis 8 ist und wobei Rein Wasserstoffatom oder eine Acylgruppe mit 1 bis 20 Kohlenstoffatomen ist und wobei X eine organische Abstandsgruppe mit 3 bis 30 Kohlenstoffatomen ist, welche wenigstens einen organischen Rest enthält, der ausgewählt ist aus der Gruppe bestehend aus:
   a) wenigstens einer Allyl-Gruppe und
   b) wenigstens einer Phenyl-Gruppe, deren Verknüpfungen an das Siliziumatom der Silyl-Gruppe (R¹)₃Si- sowie an ein Schwefelatom der Sₙ-Gruppe über einen Alkylrest mit 0 bis 20 Kohlenstoffatomen in 1,2-Position zueinander angeordnet sind, und die weitere Substituenten tragen kann, und
   c) wenigstens einer Phenyl-Gruppe, deren Verknüpfungen an das Siliziumatom der Silyl-Gruppe (R¹)₃Si- sowie an ein Schwefelatom der Sₙ-Gruppe über einen Alkylrest mit 0 bis 20 Kohlenstoffatomen in 1,3-Position zueinander angeordnet sind, und die weitere Substituenten tragen kann, und
   d) wenigstens einer Phenyl-Gruppe, deren Verknüpfungen an das Siliziumatom der Silyl-Gruppe (R¹)₃Si- sowie an ein Schwefelatom der Sₙ-Gruppe über einen Alkylrest mit 0 bis 20 Kohlenstoffatomen in 1,4-Position zueinander angeordnet sind und die zusätzlich wenigstens einen weiteren Substituenten trägt,
      und
   e) kondensierte aromatische Ringsysteme, deren Verknüpfungen an das Siliziumatom der Silyl-Gruppe (R¹)₃Si- sowie an ein Schwefelatom der Sₙ-Gruppe über einen Alkylrest mit 0 bis 20 Kohlenstoffatomen angeordnet sind und die zusätzlich wenigstens einen weiteren Substituenten tragen können.

Überraschenderweise zeigt die Kautschukmischung durch die Kombination der oben genannten Bestandteile im Vergleich zum Stand der Technik eine höhere Steifigkeit bei verbesserten Indikatoren für den Zielkonflikt aus Rollwiderstand und Nassgriff. Gleichzeitig zeigt die Kautschukmischung überraschend eine optimierte Prozessierbarkeit.

Fahrzeugluftreifen, die die erfindungsgemäße Kautschukmischung im Laufstreifen und/oder anderen Bauteilen enthalten, zeigen ein optimiertes Verhalten im Hinblick auf die Zielkonflikte Handling, Rollwiderstand und Nassgriff bei vereinfachter Herstellbarkeit. Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird in dieser Schrift auf 100 Gewichtsteile der gesamten Masse aller in der Mischung vorhandenen hochmolekularen und dadurch festen Kautschuke bezogen.

Die in dieser Schrift verwendete Angabe phf (parts per hundred parts of filler by weight) ist dabei die in der Kautschukindustrie gebräuchliche Mengenangabe für Kupplungsagenzien für Füllstoffe.

Im Rahmen der vorliegenden Anmeldung bezieht sich phf auf die vorhandene Kieselsäure, das heißt, dass andere eventuell vorhandene Füllstoffe wie Ruß nicht in die Berechnung der Silanmenge mit eingehen.

Erfindungsgemäß enthält die Kautschukmischung wenigstens einen Dienkautschuk, wobei sie wenigstens einen lösungspolymerisierten Styrol-Butadien-Kautschuk enthält.

Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.

Der Dienkautschuk ist dabei ausgewählt aus der Gruppe bestehend aus natürlichem Polyisopren und/oder synthetischem Polyisopren und/oder epoxidiertem Polyisopren und/oder Butadien-Kautschuk und/oder lösungspolymerisiertem Styrol-Butadien-Kautschuk und/oder emulsionspolymerisiertem Styrol-Butadien-Kautschuk und/oder Halobutylkautschuk und/oder Polynorbornen und/oder Isopren-Isobutylen-Copolymer und/oder Ethylen-Propylen-Dien-Kautschuk und/oder Nitril-Kautschuk und/oder Acrylat-Kautschuk und/oder Fluor-Kautschuk und/oder Chloropren-Kautschuk und/oder Silikon-Kautschuk und/oder Polysulfid-Kautschuk und/oder Epichlorhydrin-Kautschuk und/oder Styrol-Isopren-Butadien-Terpolymer und/oder hydrierter Acrylnitrilbutadienkautschuk und/oder Isopren-Butadien-Copolymer und/oder hydriertem Styrol-Butadien-Kautschuk.

Vorzugsweise ist der Dienkautschuk ausgewählt aus der Gruppe, bestehend aus natürlichem Polyisopren und/oder synthetischem Polyisopren und/oder Butadien-Kautschuk und/oder lösungspolymerisiertem Styrol-Butadien-Kautschuk und/oder emulsionspolymerisiertem Styrol-Butadien-Kautschuk.

Gemäß der Erfindung ist wenigstens ein Styrol-Butadien-Kautschuk in der Kautschukmischung enthalten. Die Kombination wenigstens eines Styrol-Butadien-Kautschuks mit wenigstens einem oben genannten Silan mit einer organischen Abstandsgruppe X gemäß obiger Ausführung ergibt besonders hohe Steifigkeiten bei verbessertem Zielkonflikt aus Rollwiderstandsverhalten vs. Nassgriffeigenschaften. Somit löst diese bevorzugte Weiterbildung den Zielkonflikt aus Rollwiderstand, Nassgriff und Handling auf einem besonders hohen Niveau bei gleichzeitig verbesserter Prozessierbarkeit.

Die Menge an Styrol-Butadien-Kautschuk beträgt bevorzugt 1 bis 95 phr, besonders bevorzugt 10 bis 95 phr, ganz besonders bevorzugt 10 bis 50 phr. Wiederum ganz besonders bevorzugt werden 20 bis 50 phr Styrol-Butadien-Kautschuk in der erfindungsgemäßen Kautschukmischung eingesetzt.

Der Styrol-Butadien-Kautschuk ist ein lösungspolymerisierter Styrol-Butadien-Kautschuk. Hiermit ergeben sich die genannten Vorteile der Erfindung (erhöhte Steifigkeit, Verbesserung im Zielkonflikt Rollwiderstand vs. Nassgriff, verbesserte Prozessierbarkeit) bei gleichzeitig sehr guten übrigen physikalischen Eigenschaften, insbesondere Zugfestigkeit, Reißeigenschaften und Abriebverhalten, der Kautschukmischung.

Gemäß einer weiteren bevorzugten Weiterbildung der Erfindung werden in der Kautschukmischung wenigstens zwei verschiedene Dienkautschuk-Typen eingesetzt. Hierbei sind bevorzugt wenigstens ein Styrol-Butadien-Kautschuk und wenigstens ein natürliches und/oder synthetisches Polyisopren und/oder wenigstens ein Butadien-Kautschuk in der Kautschukmischung enthalten. Hiermit ergeben sich eine besonders gute Prozessierbarkeit und eine Verbesserung der Kautschukmischung im Hinblick auf die physikalischen Eigenschaften, insbesondere die Indikatoren für Rollwiderstand und Nassgriff.

Die Menge an Styrol-Butadien-Kautschuk beträgt bevorzugt 1 bis 95 phr, besonders bevorzugt 10 bis 95 phr, ganz besonders bevorzugt 10 bis 50 phr. Wiederum ganz besonders bevorzugt werden 20 bis 50 phr Styrol-Butadien-Kautschuk in der erfindungsgemäßen Kautschukmischung eingesetzt. Hierbei beträgt die Menge an natürlichem und/oder synthetischen Polyisopren bevorzugt 0,1 bis 100 phr, bevorzugt 0,1 bis 50 phr und ganz besonders bevorzugt 10 bis 30 phr. Die Menge an Butadien-Kautschuk beträgt bevorzugt 0,1 bis 80 phr, besonders bevorzugt 0,1 bis 60 phr und ganz besonders bevorzugt 20 bis 60 phr.

Gemäß einer weiteren bevorzugten Weiterbildung der Erfindung werden in der Kautschukmischung drei verschiedene Dienkautschuk-Typen eingesetzt.

Hierbei sind bevorzugt wenigstens ein Styrol-Butadien-Kautschuk und ein natürliches Polyisopren und ein Butadien-Kautschuk in der Kautschukmischung enthalten. Hiermit ergeben sich eine besonders gute Prozessierbarkeit und eine Verbesserung der Kautschukmischung im Hinblick auf die physikalischen Eigenschaften, insbesondere die Indikatoren für Rollwiderstand und Nassgriff.

Die erfindungsgemäße Kautschukmischung enthält 20 bis 150 phr, bevorzugt 40 bis 150 phr, besonders bevorzugt 40 bis 110 phr und ganz besonders bevorzugt 80 bis 110 phr wenigstens einer Kieselsäure.

Bei den Kieselsäuren kann es sich um die dem Fachmann bekannten Kieselsäuren, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 80 bis 350 m²/g, bevorzugt von 80 bis 250 m²/g, besonders bevorzugt 110 bis 235 m²/g und eine CTAB-Oberfläche (gemäß ASTM D 3765) von 80 bis 350 m²/g, bevorzugt von 80 bis 245 m²/g, besonders bevorzugt von 110 bis 205 m²/g, aufweist. Derartige Kieselsäuren führen z. B. in Kautschukmischungen für Reifenlaufstreifen zu besonders guten physikalischen Eigenschaften der Vulkanisate. Außerdem können sich dabei Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs Ultrasil^{®} VN3 (Handelsname) der Firma Evonik als auch hoch dispergierbare Kieselsäuren, so genannte HD-Kieselsäuren (z.B. Zeosil^{®} 1165 MP der Firma Rhodia), zum Einsatz kommen.

Erfindungswesentlich ist es, dass die Kautschukmischung wenigstens ein Silan enthält, welches die allgemeine Summenformel

I) [(R¹)₃Si-X]ₘSₙ(R²)₂₋ₘ

aufweist,
wobei die Reste R¹ innerhalb eines Moleküls gleich oder verschieden sein können und Alkoxy-Gruppen mit 1 bis 10 Kohlenstoffatomen oder zyklische Dialkoxy-Gruppen mit 2 bis 10 Kohlenstoffatomen oder Cycloalkoxygruppen mit 4 bis 10 Kohlenstoffatomen oder Phenoxygruppen oder Halogenide sind und wobei m den Wert 1 oder 2 annimmt und wobei n eine ganze Zahl von 1 bis 8 ist und wobei Rein Wasserstoffatom oder eine Acylgruppe mit 1 bis 20 Kohlenstoffatomen ist und wobei X eine organische Abstandsgruppe mit 3 bis 30 Kohlenstoffatomen ist, welche wenigstens einen organischen Rest enthält, der ausgewählt ist aus der Gruppe bestehend aus:
a) wenigstens einer Allyl-Gruppe und
b) wenigstens einer Phenyl-Gruppe, deren Verknüpfungen an das Siliziumatom der Silyl-Gruppe (R¹)₃Si- sowie an ein Schwefelatom der Sₙ-Gruppe über einen Alkylrest mit 0 bis 20 Kohlenstoffatomen in 1,2-Position zueinander angeordnet sind, und die weitere Substituenten tragen kann, und
c) wenigstens einer Phenyl-Gruppe, deren Verknüpfungen an das Siliziumatom der Silyl-Gruppe (R¹)₃Si- sowie an ein Schwefelatom der Sₙ-Gruppe über einen Alkylrest mit 0 bis 20 Kohlenstoffatomen in 1,3-Position zueinander angeordnet sind, und die weitere Substituenten tragen kann, und
d) wenigstens einer Phenyl-Gruppe, deren Verknüpfungen an das Siliziumatom der Silyl-Gruppe (R¹)₃Si- sowie an ein Schwefelatom der Sₙ-Gruppe über einen Alkylrest mit 0 bis 20 Kohlenstoffatomen in 1,4-Position zueinander angeordnet sind und die zusätzlich wenigstens einen weiteren Substituenten trägt,
   und
e) kondensierte aromatische Ringsysteme, deren Verknüpfungen an das Siliziumatom der Silyl-Gruppe (R¹)₃Si- sowie an ein Schwefelatom der Sₙ-Gruppe über einen Alkylrest mit 0 bis 20 Kohlenstoffatomen angeordnet sind und die zusätzlich wenigstens einen weiteren Substituenten tragen können.

Dieses Silan dient dabei als Kupplungsagens zur Anbindung der in der Kautschukmischung enthaltenen Kieselsäure an die Polymerketten des Dienkautschuks bzw. der Dienkautschuke.

Silan-Kupplungsagenzien sind allgemein bekannt und reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung).

In der erfindungsgemäßen Kautschukmischung ersetzt das oben genannte Silan ganz oder teilweise die im Stand der Technik bekannten Silane wie TESPD (3,3 `-Bis(triethoxysilylpropyl)disulfid) oder TESPT (3,3 `-Bis(triethoxysilylpropyl)tetrasulfid) bei einer gleichzeitigen Erhöhung der Steifigkeit ohne, dass sich Nachteile hinsichtlich des Rollwiderstands- und Nassgriffverhaltens zeigen.

Bevorzugt erfolgt dabei ein moläquivalenter Austausch des oder der im Stand der Technik bekannten Silane durch das oben genannte Silan mit wenigstens einer organischen Abstandsgruppe gemäß obiger Ausführungen. Unter moläquivalentem Austausch ist im Rahmen der vorliegenden Erfindung zu verstehen, dass das oben genannte Silan in solchen Mengen eingesetzt wird, dass die gleiche Molmenge an Silyl-Gruppen für die Anbindung an die Kieselsäure zur Verfügung steht wie unter Verwendung der im Stand der Technik bekannten Silane in im Stand der Technik bekannten Mengen.

Es ist im Rahmen der vorliegenden Erfindung auch denkbar, dass das oben genannte Silan mit der allgemeinen Summenformel I) in Kombination mit Silanen aus dem Stand der Technik eingesetzt wird.

Unter Silyl-Gruppe wird im Rahmen der vorliegenden Erfindung die Gruppierung (R¹)₃Si-verstanden.

Das Silan mit der allgemeinen Summenformel I) ist in Mengen von 2 bis 20 phf, bevorzugt 2 bis 15 phf, besonders bevorzugt 5 bis 15 phf in der erfindungsgemäßen Kautschukmischung enthalten.

Erfindungswesentlich ist es, dass das Silan mit der oben genannten Summenformel eine organische Abstandsgruppe X mit 3 bis 30 Kohlenstoffatomen aufweist, welche wenigstens einen organischen Rest enthält, der ausgewählt ist aus der Gruppe bestehend aus:
a) wenigstens einer Allyl-Gruppe und
b) wenigstens einer Phenyl-Gruppe, deren Verknüpfungen an das Siliziumatom der Silyl-Gruppe (R¹)₃Si- sowie an ein Schwefelatom der Sₙ-Gruppe über einen Alkylrest mit 0 bis 20 Kohlenstoffatomen in 1,2-Position zueinander angeordnet sind, und die weitere Substituenten tragen kann, und
c) wenigstens einer Phenyl-Gruppe, deren Verknüpfungen an das Siliziumatom der Silyl-Gruppe (R¹)₃Si- sowie an ein Schwefelatom der Sₙ-Gruppe über einen Alkylrest mit 0 bis 20 Kohlenstoffatomen in 1,3-Position zueinander angeordnet sind, und die weitere Substituenten tragen kann, und
d) wenigstens einer Phenyl-Gruppe, deren Verknüpfungen an das Siliziumatom der Silyl-Gruppe (R¹)₃Si- sowie an ein Schwefelatom der Sₙ-Gruppe über einen Alkylrest mit 0 bis 20 Kohlenstoffatomen in 1,4-Position zueinander angeordnet sind und die zusätzlich wenigstens einen weiteren Substituenten trägt,
   und
e) kondensierte aromatische Ringsysteme, deren Verknüpfungen an das Siliziumatom der Silyl-Gruppe (R¹)₃Si- sowie an ein Schwefelatom der Sₙ-Gruppe über einen Alkylrest mit 0 bis 20 Kohlenstoffatomen angeordnet sind und die zusätzlich wenigstens einen weiteren Substituenten tragen können.

Diese somit organische arylische und/oder organische allylische Gruppe X verknüpft das oder die Siliziumatom(e) mit einem Schwefelatom der Gruppierung Sₙ. Sind zwei oder mehr organische Reste in der organischen Abstandsgruppe X enthalten, können diese gleich oder verschieden voneinander sein.

In der Fachwelt wird eine derartige verknüpfende Abstandsgruppe auch Spacer genannt, da sie den Abstand zwischen Silizium (Anbindung an den Füllstoff) und Schwefel (Anbindung an den Dienkautschuk) bestimmt.

Die im Stand der Technik bekannten organischen Spacer weisen Alkyl-Gruppen auf, wobei ein Propyl-Rest (oder auch eine Propyl-Gruppe genannt) wie in den oben aufgeführten Silanen TESPD und TESPT üblich ist.

Mit der erfindungsgemäßen Kautschukmischung wurde gefunden, dass unter Verwendung eines Silans mit einer organischen arylischen und/oder einer organischen allylischen Abstandsgruppe X anstatt eines Silanes mit einem rein alkylischen Spacer eine erhöhte Steifigkeit der Kautschukmischung bei einer gleichzeitigen Verkürzung der Ausvulkanisationszeit erzielt wird.

Zudem ergeben sich besonders gute Eigenschaften der Kautschukmischung im Hinblick auf den Zielkonflikt aus Rollwiderstandsverhalten, Nassgriffeigenschaften und Handling-Verhalten, wenn gleichzeitig wenigstens ein Styrol-Butadien-Kautschuk enthalten ist.

Aryl-Gruppen sind in der Chemie allgemein und speziell in der Fachwelt der Kautschukchemie bekannt. Gemäß Römpp Online, Version 3.29 ist "Aryl..." eine allgemeine Bezeichnung für aromatische (Kohlenwasserstoff-)Reste. Hierbei kann es sich z.B. um Phenyl- (C₆H₅ -), Naphthyl- (C₁₀H₇-), Anthryl- (C₁₄H₉-) Reste und/oder Derivate dieser Gruppierungen halten. Bevorzugte Derivate der genannten Aryl-Gruppen sind solche, die anstelle eines oder mehrere Wasserstoffatome am aromatischen Gerüst eine Alkyl-Gruppe tragen.

Obige Auflistung enthält organische Abstandsgruppen mit 3 bis 30 Kohlenstoffatomen, die Aryl-Gruppen gemäß der Möglichkeiten b), c), d) oder e) enthalten, die im Folgenden näher erläutert werden:
Gemäß der Ausführungsform b) enthält die organische Abstandsgruppe X als organischen Rest wenigstens eine Phenyl-Gruppe, deren Verknüpfungen an das Siliziumatom der Silyl-Gruppe (R¹)₃Si- sowie an ein Schwefelatom der Sₙ-Gruppe über einen Alkylrest mit 0 bis 20 Kohlenstoffatomen in 1,2-Position zueinander angeordnet sind, und die weitere Substituenten tragen kann.

Diese Ausführungsform umfasst somit sowohl die direkte Anbindung des Siliziumatoms und/oder des Schwefelatoms an das aromatische Gerüst als auch die Anbindung des Siliziumatoms und/oder des Schwefelatoms über Alkylgruppen mit 1 bis 20 Kohlenstoffatomen an das aromatische Gerüst.

Diese zwischen dem Siliziumatom und dem aromatischen Gerüst bzw. zwischen dem Schwefelatom und dem aromatischen Gerüst angeordneten Alkylgruppen können verzweigt oder unverzweigt sein.

Ferner können gemäß Ausführungsform b) neben den Verknüpfungen an das Siliziumatom und das Schwefelatom weitere Substituenten an dem aromatischen Gerüst angebunden sein. Bei den weiteren Substituenten kann es sich z.B. um Alkylreste mit 1 bis 10 Kohlenstoffatomen handeln. Bevorzugt handelt es sich bei dem weiteren Substituenten um eine Alkylgruppe mit 1 bis 3 Kohlenstoffatomen, besonders bevorzugt um eine Methylgruppe mit einem Kohlenstoffatom.

Das aromatische Gerüst gemäß Ausführungsform b) ist ein Phenyl-Ring. Somit stehen die Verknüpfungen an das Siliziumatom der Silyl-Gruppe (R¹)₃Si- sowie an ein Schwefelatom der Sₙ-Gruppe in ortho-Position zueinander.

Hierbei können dann in der Position 3 und/oder 4 und/oder 5 und/oder 6 weitere Substituenten, bevorzugt eine Alkylgruppe mit 1 bis 10 Kohlenstoffatomen, besonders bevorzugt eine Methylgruppe mit einem Kohlenstoffatom, an den Phenyl-Ring angebunden sein.

Gemäß der Ausführungsform c) enthält die organische Abstandsgruppe X als organischen Rest wenigstens eine Phenyl-Gruppe, deren Verknüpfungen an das Siliziumatom der Silyl-Gruppe (R¹)₃Si- sowie an ein Schwefelatom der Sₙ-Gruppe über einen Alkylrest mit 0 bis 20 Kohlenstoffatomen in 1,3-Position zueinander angeordnet sind, und die weitere Substituenten tragen kann.

Diese Ausführungsform umfasst sowohl die direkte Anbindung des Siliziumatoms und/oder des Schwefelatoms an das aromatische Gerüst als auch die Anbindung des Siliziumatoms und/oder des Schwefelatoms über Alkylgruppen mit 1 bis 20 Kohlenstoffatomen an das aromatische Gerüst.

Diese zwischen dem Siliziumatom und dem aromatischen Gerüst bzw. zwischen dem Schwefelatom und dem aromatischen Gerüst angeordneten Alkylgruppen können verzweigt oder unverzweigt sein.

Ferner können gemäß Ausführungsform c) neben den Verknüpfungen an das Siliziumatom und das Schwefelatom weitere Substituenten an dem aromatischen Gerüst angebunden sein. Bei den weiteren Substituenten kann es sich z.B. um Alkylreste mit 1 bis 10 Kohlenstoffatomen handeln. Bevorzugt handelt es sich bei dem weiteren Substituenten um eine Alkylgruppe mit 1 bis 3 Kohlenstoffatomen, besonders bevorzugt um eine Methylgruppe mit einem Kohlenstoffatom.

Das aromatische Gerüst gemäß Ausführungsform c) ist ein Phenyl-Ring. Somit stehen die Verknüpfungen an das Siliziumatom der Silyl-Gruppe (R¹)₃Si- sowie an ein Schwefelatom der Sₙ-Gruppe in meta-Position zueinander. Hierbei können dann in der Position 2 und/oder 4 und/oder 5 und/oder 6 weitere Substituenten, bevorzugt eine Alkylgruppe mit 1 bis 10 Kohlenstoffatomen, besonders bevorzugt eine Methylgruppe mit einem Kohlenstoffatom, an den Phenyl-Ring angebunden sein.

Gemäß der Ausführungsform d) enthält die organische Abstandsgruppe X als organischen Rest wenigstens eine Phenyl-Gruppe, deren Verknüpfungen an das Siliziumatom der Silyl-Gruppe (R¹)₃Si- sowie an ein Schwefelatom der Sₙ-Gruppe über einen Alkylrest mit 0 bis 20 Kohlenstoffatomen in 1,4-Position zueinander angeordnet sind und die zusätzlich wenigstens einen weiteren Substituenten trägt.

Diese Ausführungsform umfasst sowohl die direkte Anbindung des Siliziumatoms und/oder des Schwefelatoms an das aromatische Gerüst als auch die Anbindung des Siliziumatoms und/oder des Schwefelatoms über Alkylgruppen mit 1 bis 20 Kohlenstoffatomen an das aromatische Gerüst.

Diese zwischen dem Siliziumatom und dem aromatischen Gerüst bzw. zwischen dem Schwefelatom und dem aromatischen Gerüst angeordneten Alkylgruppen können verzweigt oder unverzweigt sein.

Ferner sind gemäß Ausführungsform d) neben den Verknüpfungen an das Siliziumatom und das Schwefelatom weitere Substituenten an dem aromatischen Gerüst angebunden. Bei den weiteren Substituenten kann es sich z.B. um Alkylreste mit 1 bis 10 Kohlenstoffatomen handeln. Bevorzugt handelt es sich bei dem weiteren Substituenten um eine Alkylgruppe mit 1 bis 3 Kohlenstoffatomen, besonders bevorzugt um eine Methylgruppe mit einem Kohlenstoffatom.

Das aromatische Gerüst gemäß Ausführungsform d) ist ein Phenyl-Ring. Somit stehen die Verknüpfungen an das Siliziumatom der Silyl-Gruppe (R¹)₃Si- sowie an ein Schwefelatom der Sₙ-Gruppe in para-Position zueinander. Hierbei sind dann in der Position 2 und/oder 3 und/oder 5 und/oder 6 weitere Substituenten, bevorzugt eine Alkylgruppe mit 1 bis 10 Kohlenstoffatomen, besonders bevorzugt eine Methylgruppe mit einem Kohlenstoffatom, an den Phenyl-Ring angebunden.

Gemäß der Ausführungsform e) enthält die organische Abstandsgruppe X als organischen Rest wenigstens ein kondensiertes aromatisches Ringsystem, dessen Verknüpfungen an das Siliziumatom der Silyl-Gruppe (R¹)₃Si- sowie an ein Schwefelatom der Sₙ-Gruppe über einen unverzweigten Alkylrest mit 0 bis 20 Kohlenstoffatomen angeordnet sind und das zusätzlich wenigstens einen weiteren Substituenten tragen kann.

Unter "kondensierte Ringsysteme" werden gemäß RÖMPP Online Lexikon, Version 3.34 "solche Ringsysteme" verstanden, "in denen Benzol-Ringe miteinander verschmolzen, d.h. durch Anellierung einander ankondensiert sind". Kondensierte aromatische Ringsysteme sind folglich solche kondensierte Ringsysteme, die aromatisch sind. Darunter fallen die oben unter Aryl-Gruppen bereits aufgeführten Systeme Naphthalin und Anthracen.

Gemäß Ausführungsform e) ist sowohl die direkte Anbindung des Siliziumatoms und/oder des Schwefelatoms an das aromatische Gerüst als auch die Anbindung des Siliziumatoms und/oder des Schwefelatoms über Alkylgruppen mit 1 bis 20 Kohlenstoffatomen an das aromatische Gerüst umfasst. Diese zwischen dem Siliziumatom und dem aromatischen Gerüst bzw. zwischen dem Schwefelatom und dem aromatischen Gerüst angeordneten Alkylgruppen können verzweigt oder unverzweigt sein.

Die Verknüpfungen zwischen dem Siliziumatom und dem aromatischen Gerüst bzw. zwischen dem Schwefelatom und dem aromatischen Gerüst können hierbei in allen dem Fachmann bekannten Positionen angeordnet sein. Dies bedeutet am Beispiel einer Naphthyl-Gruppe, dass das Schwefelatom z.B. an Position 1 angebunden sein kann, und das Siliziumatom der Silyl-Gruppe an Position 2 oder an Position 8 angebunden sein kann, woraus sich formal eine 1,2 bzw. 1,8-Substitution von Naphthalin ergibt.

Handelt es sich bei dem kondensierten aromatischen Ringsystem um das Derivat von Phenanthren, deren jeweilige Verknüpfungen an das Siliziumatom der Silyl-Gruppe (R¹)₃Si- sowie an ein Schwefelatom der Sₙ-Gruppe in der 2,7-Position zueinander stehen, enthalten die alkylischen Verknüpfungen keine Heteroatome und/oder es sind weitere Substituenten am Phenanthren-Gerüst angebunden.

Allyl-Gruppen sind in der Chemie allgemein und speziell in der Fachwelt der Kautschukchemie bekannt. Gemäß Römpp Online, Version 3.29 ist "Allyl..." eine Bezeichnung für die Atomgruppierung -CH₂-CH=CH₂.

Gemäß Ausführungsform a) enthält die organischen Abstandsgruppe X wenigstens eine Allyl-Gruppe. Die Anbindung an das Schwefelatom der Gruppierung Sₙ sowie an das Siliziumatom der Silyl-Gruppe (R¹)₃Si- kann direkt oder über einen unverzweigten Alkylrest mit 1 bis 20 Kohlenstoffatomen erfolgen.

Unter "unverzweigtem Alkylrest" ist im Rahmen der vorliegenden Erfindung eine Kohlenstoffkette zu verstehen, die kein Kohlenstoffatom mit drei Einfachbindungen zu weiteren Kohlenstoffatomen aufweist und die somit kein Cycloalkanrest enthält.

Durch die Verwendung eines Silans mit einer organischen Abstandsgruppe, die ausgewählt ist aus den Möglichkeiten a) und b) und c) und d) und e), ergibt sich im Vergleich zu rein alkylischen Spacern, also Spacern die lediglich Alkyl-Gruppen sind, eine verbesserte Wechselwirkung mit Dienkautschuken, insbesondere mit Styrol-Butadien-Kautschuken.

In einer besonders bevorzugten Ausführungsform der Erfindung ist die organische Abstandsgruppe X gemäß b) oder c) oder d) oder e) ausgeführt und somit ein arylischer Spacer. Ganz besonders bevorzugt wird in der erfindungsgemäßen Kautschukmischung ein Silan in der Ausführungsform c) der organischen Abstandsgruppe verwendet. Hiermit werden besonders hohe Steifigkeiten bei verbessertem Zielkonflikt der Indikatoren für Rollwiderstand und Nassgriff der Kautschukmischung erzielt.

Die an das Siliziumatom gebundenen Reste R¹ sind Alkoxy-Gruppen mit 1 bis 10 Kohlenstoffatomen oder zyklische Dialkoxy-Gruppen mit 2 bis 10 Kohlenstoffatomen oder Cycloalkoxygruppen mit 4 bis 10 Kohlenstoffatomen oder Phenoxygruppen oder Halogenide und können innerhalb eines Moleküls gleich oder verschieden voneinander sein. Es ist dabei auch denkbar, dass die zyklische Dialkoxy-Gruppe so angebunden ist, dass es mit beiden Sauerstoffatomen an das Siliziumatom gebunden ist und somit als zwei angebundene Reste R¹ zählt, wobei der weitere Rest R¹ ausgewählt ist aus den oben genannten Möglichkeiten.

Bevorzugt handelt es sich bei R¹ jedoch um Methoxy- und/oder Ethoxy-Gruppen. Besonders bevorzugt sind alle drei Reste R¹ gleich und Methoxy- und/oder Ethoxy-Gruppen und ganz besonders bevorzugt drei Ethoxy-Gruppen.

Der Index m kann die Werte 1 oder 2 annehmen. Somit kann die Gruppe

II) [(R¹)₃Si-X]

einmal oder zweimal pro Molekül vorhanden sein. Im Fall von m = 2 ist der Schwefel also nur an zwei dieser Gruppen gebunden, sodass in diesem Fall kein Rest R² im Molekül vorhanden ist. Die beiden Gruppen II) sind dann über die Gruppierung Sₙ mit n = 1 bis 8 verknüpft, also über ein Schwefelatom oder eine Kette von 2 bis 8 Schwefelatomen. Bevorzugt ist n eine ganze Zahl von 2 bis 6, besonders bevorzugt von 2 bis 4. Hiermit ergeben sich besonders gute Eigenschaften im Hinblick auf die Steifigkeit und das Vulkanisationsverhalten, insbesondere die Ausvulkanisationszeit.

Für den Fall, dass m = 1 ist, ist ein Rest R² an das von der Silyl-Gruppe am weitesten entfernte Schwefelatom gebunden. R² ist ein Wasserstoffatom oder eine Acylgruppe mit 1 bis 20 Kohlenstoffatomen ist. Handelt es sich bei dem Rest R² um eine Acylgruppe, so ist bevorzugt das Kohlenstoffatom, welches die Keto-Gruppe, also die Doppelbindung zum Sauerstoffatom, trägt an das von der Silyl-Gruppe am weitesten entfernte Schwefelatom gebunden.

Unter Silyl-Gruppe wird im Rahmen der vorliegenden Erfindung die Gruppierung

III) (R¹)₃Si-

verstanden.

Damit kann es sich bei dem Silan entweder um ein Mercaptosilan oder ein geschütztes Mercaptosilan, auch geblocktes Mercaptosilan genannt, handeln.

Bevorzugt enthält die erfindungsgemäße Kautschukmischung ein Silan mit der folgenden Struktur:

IV) [(R¹)₃Si-X]₂Sₙ

In der oben genannten Summenformel I) ist
m somit gleich 2, sodass die Gruppierung Sₙ an beiden Seiten an eine Gruppierung

   II) [(R1)3Si-X]
geknüpft ist.

Besonders bevorzugt sind die organischen Abstandsgruppen X und die Reste R¹ auf beiden Seiten des Moleküls gleich.

Hierbei ist R¹ besonders bevorzugt eine Ethoxy-Gruppe, die dann insgesamt sechsmal im Molekül vorhanden ist.

Bevorzugt ist X auf beiden Seiten eine organische Abstandsgruppe gemäß der Ausführungsformen b) oder c) oder d). Besonders bevorzugt ist dabei der aromatische Molekülteil, also der Phenyl-Ring, über eine Alkyl-Gruppe an das Siliziumatom gebunden, sodass es sich bei der organischen Abstandsgruppe um das Derivat einer aromatischen Verbindung mit wenigstens einer Alkyl-Gruppe als Substituent handelt.

Besonders bevorzugt ist es, wenn die organische Abstandsgruppe X ein Derivat von 1-Ethyl-3-Methyl-Benzol ist. Hierbei ist die Ethyl-Gruppe die Verknüpfung zwischen dem Siliziumatom der Silyl-Gruppe und dem aromatischen Gerüst und die Methyl-Gruppe ein weiterer Substituent in Position 3, also in "meta-Position" zu dem Ethyl-Rest. Die Anbindung an ein Schwefelatom der Sₙ-Gruppe erfolgt in Position 5, sodass der Phenyl-Ring 1,3,5-substituiert ist.

Dabei ist das Schwefelatom jeder Seite bevorzugt direkt an das aromatische Gerüst des Derivates einer Aryl-Gruppe gebunden.

Das bevorzugte Silan hat die folgende Struktur:

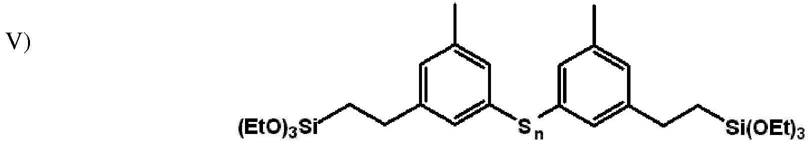

Mit diesem Silan mit n = 2 bis 4 werden besonders gute Steifigkeiten bei verbessertem Zielkonflikt Rollwiderstand versus Nassgriff und verbesserter Prozessierbarkeit erzielt.

Bevorzugt ist in der allgemeinen Summenformel I) n gleich 2 bis 4, sodass eine Kette von zwei bis vier Schwefelatomen vorliegt, von der jeweils ein Schwefelatom an jeweils eine der organischen Abstandsgruppen gebunden ist.

Die erfindungsgemäße Kautschukmischung kann neben Kieselsäure noch weitere bekannte polare und/oder unpolare Füllstoffe, wie z.B. Ruß, enthalten.

Enthält die erfindungsgemäße Kautschukmischung Ruß, wird bevorzugt ein Ruß eingesetzt, der eine Jodadsorptionszahl gemäß ASTM D 1510 von 60 bis 200 g/kg, bevorzugt 70 bis 200 g/kg, besonders bevorzugt 70 bis 150 kg/g, und eine DBP-Zahl gemäß ASTM D 2414 von 80 bis 200 ml/100 g, bevorzugt 100 bis 200 ml/100g, besonders bevorzugt 100 bis 150 ml/100g, aufweist.

Die Menge an Ruß in der erfindungsgemäßen Kautschukmischung beträgt bevorzugt 0 bis 50 phr, besonders bevorzugt 0 bis 20 phr und ganz besonders bevorzugt 0 bis 7 phr, in einer bevorzugten Ausführungsform wenigstens aber 0,1 phr.

In einer weiteren bevorzugten Ausführungsform der Erfindung enthält die Kautschukmischung 0 bis 0,5 phr Ruß.

Es können in der Kautschukmischung 0 bis 100 phr, bevorzugt 0,1 bis 80 phr, besonders bevorzugt 0,1 bis 70 phr und ganz besonders bevorzugt 0,1 bis 50 phr, zumindest eines Weichmachers vorhanden sein. Dieser Weichmacher ist ausgewählt aus der Gruppe, bestehend aus Mineralölen und/oder synthetischen Weichmachern und/oder Fettsäuren und/oder Fettsäurederivaten und/oder Harzen und/oder Faktisse und/oder Glyceriden und/oder Terpenen und/oder Rubber-To-Liquid-Ölen (RTL-Öle) und/oder Biomass-To-Liquid-Ölen (BTL-Öle) und/oder Flüssig-Polymeren (wie Flüssig-BR), deren mittleres Molekulargewicht (Bestimmung per GPC = gel permeation chromatography in Anlehnung an BS ISO 11344:2004) zwischen 500 und 25000 g/mol liegt.

Werden in der erfindungsgemäßen Kautschukmischung Flüssig-Polymere als Weichmacher eingesetzt, so gehen diese nicht als Kautschuk in die Berechnung der Zusammensetzung der Polymermatrix ein.

Mineralöle sind als Weichmacher besonders bevorzugt.

Bei der Verwendung von Mineralöl ist dieses bevorzugt ausgewählt aus der Gruppe, bestehend aus DAE (Destillated Aromatic Extracts) und/oder RAE (Residual Aromatic Extract) und/oder TDAE (Treated Destillated Aromatic Extracts) und/oder MES (Mild Extracted Solvents) und/oder naphthenisches Öl.

Die erfindungsgemäße schwefelvernetzbare Kautschukmischung enthält bevorzugt weiterhin ein Vulkanisationssystem, das wenigstens einen Beschleuniger und elementaren Schwefel und/oder eine schwefelspendende Substanz (auch Schwefelspender genannt) enthält. Die Mengen dieser genannten Bestandteile des Vulkanisationssystems sind dabei die im Stand der Technik bekannten üblichen Mengen in schwefelvernetzten Kautschukmischungen.

Der Beschleuniger ist ausgewählt aus der Gruppe enthaltend z.B. Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Guanidinbeschleunigern und/oder Xanthogenatbeschleunigern.

Bevorzugt ist die Verwendung zumindest eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert.Butyl-2-benzothiazylsulfenamid (TBBS).

Gemäß einer bevorzugten Weiterbildung der Erfindung sind mehrere Beschleuniger in der Kautschukmischung enthalten.

Besonders bevorzugt ist die Verwendung der Beschleuniger TBBS und/oder CBS und/oder Diphenylguanidin (DPG).

Als schwefelspendende Substanz können dabei alle dem Fachmann bekannten schwefelspendenden Substanzen verwendet werden. Enthält die Kautschukmischung eine schwefelspende Substanz, ist diese bevorzugt ausgewählt aus der Gruppe enthaltend z.B. Thiuramdisulfide, wie z.B. Tetrabenzylthiuramdisulfid (TBzTD) und/oder Tetramethylthiuramdisulfid (TMTD) und/oder Tetramethylthiurammonosulfid (TMTM) und/oder Tetraethylthiuramdisulfid (TETD), und/oder Thiuramtetrasulfide, wie z.B. Dipentamethylenthiuramtetrasulfid (DPTT), und/oder Dithiophosphate, wie z.B. DipDis (Bis-(Diisopropyl)thiophosphoryldisulfid) und/oder Bis(O,O-2-ethylhexyl-thiophosphoryl)Polysulfid (z. B. Rhenocure SDT 50^{®}, Rheinchemie GmbH) und/oder Zinkdichloryldithiophosphat (z. B. Rhenocure ZDT/S^{®}, Rheinchemie GmbH) und/oder Zinkalkyldithiophosphat, und/oder 1,6-Bis(N,N-dibenzylthiocarbamoyldithio)hexan und/oder Diarylpolysulfide und/oder Dialkylpolysulfide.

Auch weitere netzwerkbildende Systeme, wie sie beispielsweise unter den Handelsnamen Vulkuren^{®}, Duralink^{®} oder Perkalink^{®} erhältlich sind, oder netzwerkbildende Systeme, wie sie in der WO 2010/049261 A2 beschrieben sind, können in der Kautschukmischung eingesetzt werden.

Des Weiteren kann die erfindungsgemäße Kautschukmischung übliche Zusatzstoffe in üblichen Gewichtsteilen enthalten. Zu diesen Zusatzstoffen zählen a) Alterungsschutzmittel, wie z. B. N-Phenyl-N'-(1,3-dimethylbutyl)-p-phenylendiamin (6PPD), N,N`-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ), b) Aktivatoren, wie z. B. Zinkoxid und Fettsäuren (z. B. Stearinsäure), c) Zinkseifen, d) Wachse, e) Harze und f) Mastikationshilfsmittel, wie z. B. 2,2'-Dibenzamidodiphenyldisulfid (DBD).

Der Mengenanteil der Gesamtmenge an weiteren Zusatzstoffen beträgt 3 bis 150 phr, bevorzugt 3 bis 100 phr und besonders bevorzugt 5 bis 80 phr.

Im Gesamtmengenanteil der weiteren Zusatzstoffe finden sich wie oben aufgeführt 0,1 bis 10 phr, bevorzugt 0,2 bis 8 phr, besonders bevorzugt 0,2 bis 4 phr, Zinkoxid.

Es ist üblich, einer Kautschukmischung für die Schwefelvernetzung mit Vulkanisationsbeschleunigern Zinkoxid als Aktivator meist in Kombination mit Fettsäuren (z. B. Stearinsäure) zuzusetzen. Der Schwefel wird dann durch Komplexbildung für die Vulkanisation aktiviert. Das herkömmlicherweise verwendete Zinkoxid weist dabei in der Regel eine BET-Oberfläche von weniger als 10 m²/g auf. Es kann aber auch so genanntes nano-Zinkoxid mit einer BET-Oberfläche von 10 bis 60 m²/g verwendet werden.

Die Herstellung der erfindungsgemäßen Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt.

Die Fertigmischung wird z.B. durch einen Extrusionsvorgang weiterverarbeitet und in die entsprechende Form gebracht.

Eine weitere Aufgabe der vorliegenden Erfindung besteht darin, einen Fahrzeugreifen bereitzustellen, der sich durch ein verbessertes Handling-Verhalten und verbessertem Zielkonflikt aus Rollwiderstand versus Nassgriffeigenschaften auszeichnet. Gelöst wird diese Aufgabe dadurch, dass der Fahrzeugreifen in wenigstens einem Bauteil die erfindungsgemäße Kautschukmischung wie oben beschrieben enthält. Dabei gelten alle oben genannten Ausführungen zu den Bestandteilen und deren Merkmale.

Bevorzugt handelt es sich bei dem Bauteil um einen Laufstreifen. Wie dem Fachmann bekannt ist, trägt der Laufstreifen in hohem Maß zum Handling-Verhalten von Fahrzeugreifen bei. Besonders bevorzugt handelt es sich bei dem Fahrzeugreifen um einen Fahrzeugluftreifen.

Die erfindungsgemäße Kautschukmischung ist aber auch für andere Bauteile von Fahrzeugreifen, wie der Seitenwand und/oder inneren Bauteilen, den sogenannten Body-Bauteilen geeignet.

Eine weitere Aufgabe der vorliegenden Erfindung besteht, darin, das Handling-Verhalten und die Eigenschaften hinsichtlich des Zielkonflikts aus Rollwiderstand und Nassgriff von Fahrzeugreifen zu verbessern. Gelöst wird diese Aufgabe erfindungsgemäß durch die Verwendung der oben beschriebenen Kautschukmischung mit allen oben genannten Ausführungsformen und Merkmalen in Fahrzeugreifen.

Die Kautschukmischung ist weiterhin zur Herstellung von technischen Kautschukartikeln wie z.B. Transportbändern, Riemen, Gurten, Schläuchen, Drucktüchern, Luftfedern oder Dämpfungselementen geeignet.

Die Erfindung soll nun anhand von Vergleichs- und Ausführungsbeispielen, die in der Tabelle 1 zusammengefasst sind, näher erläutert werden.

Die Vergleichsmischungen sind mit V, die erfindungsgemäßen Mischungen sind mit E gekennzeichnet.

Die Mischungsherstellung erfolgte unter üblichen Bedingungen in drei Stufen in einem Labortangentialmischer. Aus sämtlichen Mischungen wurden Prüfkörper durch optimale Vulkanisation unter Druck bei 160 °C hergestellt und mit diesen Prüfkörpern für die Kautschukindustrie typische Materialeigenschaften mit den im Folgenden angegebenen Testverfahren ermittelt.
- S'min, während der Vulkanisationsphase kleinstes auftretendes Drehmoment, gemäß Rheometer-Messung nach DIN 53529
- Shore-A-Härte bei Raumtemperatur (RT) und 70 °C gemäß DIN ISO 7619-1
- Rückprallelastizität bei RT und 70 °C gemäß DIN 53 512
- Zugfestigkeit und Spannungswert bei 300% statischer Dehnung (Modul 300) bei Raumtemperatur gemäß DIN 53 504

**Tabelle 1**

| Bestandteile | Einheit | V1 | E1 | E2 |
|---|---|---|---|---|
| NR TSR | phr | 20 | 20 | 20 |
| BR ^{a)} | phr | 44 | 44 | 44 |
| SSBR ^{b)} | phr | 36 | 36 | 36 |
| Kieselsäure ^{c)} | phr | 95 | 95 | 95 |
| Silan ^{d)} | phf | 7,2 | - | - |
| Silan ^{e)} | phf | - | 7,2 | 10,0 |
| Weichmacher | phr | 45 | 45 | 45 |
| Alterungsschutzm. | phr | 4 | 4 | 4 |
| Stearinsäure | phr | 2,5 | 2,5 | 2,5 |
| ZnO | phr | 2,5 | 2,5 | 2,5 |
| Beschleuniger ^{f)} | phr | 3,6 | 3,6 | 3,6 |
| Schwefel | phr | 2 | 2 | 2 |
| | | | | |

| **Physikalische Eigenschaften** | | | | |
|---|---|---|---|---|
| S'min | dNm | 3 | 2 | 2 |
| Shore Härte b. RT | Shore A | 69 | 66 | 68 |
| Shore Härte b. 70 °C | Shore A | 63 | 61 | 64 |
| Rückprallelast. b. RT | % | 33 | 33 | 34 |
| Rückprallelast. b. 70 °C | % | 44 | 44 | 47 |
| Diff. Rückprall (70 °C - RT) | | 11 | 11 | 13 |
| Zugfestigkeit | MPa | 14 | 15 | 14 |
| Modul 300 | MPa | 6,4 | 6,3 | 7,0 |

### Verwendete Substanzen

^{a)} BR: Polybutadien, Hoch-cis Nd-BR, unfunktionalisiert, T_{g} = -105 °C, BUNA^{®} CB25, Fa. Lanxess
^{b)} SSBR: Sprintan^{®} SLR-4601, Fa. Styron
^{c)} Kieselsäure: ULTRASIL^{®} VN3, Fa. Evonik
^{d)} Silan mit 75 Gew.-% S2-Anteil, Si261^{®}, Fa. Evonik
^{e)} Silan mit organischer arylischer Abstandsgruppe gemäß Struktur V), SIB1820.5, Fa. GELEST: 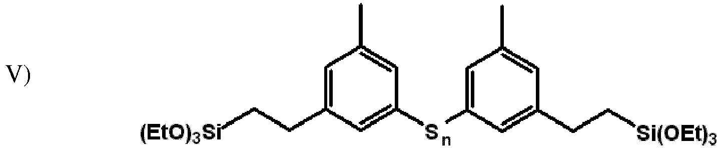
^{f)} Beschleuniger: DPG (Diphenylguanidin) und CBS (N-Cyclohexyl-2-benzothiazolsufenamid)

Wie aus Tabelle 1 anhand des Vergleiches E1 und E2 vs. V1 zu erkennen ist, weisen die erfindungsgemäßen Kautschukmischungen eine höhere Steifigkeit auf, was sich in den erhöhten Werten für Modul 300 zeigt. Gleichzeitig weist die erfindungsgemäße Kautschukmischung E2, bei der ein moläquivalenter Silan-Austausch gegenüber V1 stattgefunden hat, im Hinblick auf den Zielkonflikt aus Rollwiderstand und Nassgriff eine Verbesserung auf, was an den Indikatoren Rückprallelastizität bei 70°C für Rollwiderstand und Rückprallelastizität bei Raumtemperatur für Nassgriff bzw. der erhöhten Differenz der genannten Rückprallelastizitäten erkennbar ist.

Dabei zeigen die erfindungsgemäßen Kautschukmischungen eine verbesserte Prozessierbarkeit, was an den verringerten Werten für S'min erkennbar ist.

Hieraus ergibt sich für die Anwendung der erfindungsgemäßen Kautschukmischung in Fahrzeugreifen, insbesondere in Laufstreifen von Fahrzeugluftreifen, ein verbessertes Handling-Verhalten, ein verbessertes Verhalten hinsichtlich des Zielkonfliktes aus Rollwiderstands und Nassgriff sowie eine Verbesserung der Prozessierbarkeit der Mischung bei der Herstellung der Reifen.

## Patentansprüche

1. Schwefelvernetzbare Kautschukmischung enthaltend
- wenigstens einen Dienkautschuk, wobei sie wenigstens einen lösungspolymerisierten Styrol-Butadien-Kautschuk enthält; und
- 10 bis 200 phr wenigstens einer Kieselsäure und
- 2 bis 20 phf wenigstens eines Silans mit der allgemeinen Summenformel I) [(R¹)₃Si-X]ₘSₙ(R²)₂₋ₘ , wobei die Reste R¹ innerhalb eines Moleküls gleich oder verschieden sein können und Alkoxy-Gruppen mit 1 bis 10 Kohlenstoffatomen oder zyklische Dialkoxy-Gruppen mit 2 bis 10 Kohlenstoffatomen oder Cycloalkoxygruppen mit 4 bis 10 Kohlenstoffatomen oder Phenoxygruppen oder Halogenide sind und wobei m den Wert 1 oder 2 annimmt und wobei n eine ganze Zahl von 1 bis 8 ist und wobei R² ein Wasserstoffatom oder eine Acylgruppe mit 1 bis 20 Kohlenstoffatomen ist und wobei X eine organische Abstandsgruppe mit 3 bis 30 Kohlenstoffatomen ist, welche wenigstens einen organischen Rest enthält, der ausgewählt ist aus der Gruppe bestehend aus:
a) wenigstens einer Allyl-Gruppe
und
b) wenigstens einer Phenyl-Gruppe, deren Verknüpfungen an das Siliziumatom der Silyl-Gruppe (R¹)₃Si- sowie an ein Schwefelatom der Sₙ-Gruppe über einen Alkylrest mit 0 bis 20 Kohlenstoffatomen in 1,2-Position zueinander angeordnet sind, und die weitere Substituenten tragen kann, und
c) wenigstens einer Phenyl-Gruppe, deren Verknüpfungen an das Siliziumatom der Silyl-Gruppe (R¹)₃Si- sowie an ein Schwefelatom der Sₙ-Gruppe über einen Alkylrest mit 0 bis 20 Kohlenstoffatomen in 1,3-Position zueinander angeordnet sind, und die weitere Substituenten tragen kann, und
d) wenigstens einer Phenyl-Gruppe, deren Verknüpfungen an das Siliziumatom der Silyl-Gruppe (R¹)₃Si- sowie an ein Schwefelatom der Sₙ-Gruppe über einen Alkylrest mit 0 bis 20 Kohlenstoffatomen in 1,4-Position zueinander angeordnet sind und die zusätzlich wenigstens einen weiteren Substituenten trägt,
und
e) kondensierte aromatische Ringsysteme, deren Verknüpfungen an das Siliziumatom der Silyl-Gruppe (R¹)₃Si- sowie an ein Schwefelatom der Sₙ-Gruppe über einen Alkylrest mit 0 bis 20 Kohlenstoffatomen angeordnet sind und die zusätzlich wenigstens einen weiteren Substituenten tragen können, wobei "phf" "parts per hundred parts of filler by weight" bedeutet und sich auf die vorhandene Kieselsäure bezieht.

2. Schwefelvernetzbare Kautschukmischung nach Anspruch 1, **dadurch gekennzeichnet, dass** die organische Abstandsgruppe X ein Derivat von 1-Ethyl-3-Methyl-Benzol ist.

3. Fahrzeugreifen, **dadurch gekennzeichnet, dass** er in wenigstens einem Bauteil eine schwefelvernetzbare Kautschukmischung nach einem der vorhergehenden Ansprüche enthält.

4. Fahrzeugreifen nach Anspruch 3, **dadurch gekennzeichnet, dass** es sich bei dem Bauteil um einen Laufstreifen handelt.

5. Verwendung einer Kautschukmischung nach einem der Ansprüche 1 oder 2 in Fahrzeugreifen zur Verbesserung des Handling-Verhaltens und der Eigenschaften im Zielkonflikt zwischen Rollwiderstand versus Nassgriff von Fahrzeugreifen.

## Claims

1. Sulfur-crosslinkable rubber mixture comprising
- at least one diene rubber, the mixture comprising at least one solution-polymerized styrene-butadiene rubber; and
- 10 to 200 phr of at least one silica and
- 2 to 20 phf of at least one silane having the general empirical formula I) [(R¹)₃Si-X]ₘSₙ(R²)₂₋ₘ, where the radicals R¹ may be identical or different within one molecule and are alkoxy groups having 1 to 10 carbon atoms or cyclic dialkoxy groups having 2 to 10 carbon atoms or cycloalkoxy groups having 4 to 10 carbon atoms or phenoxy groups or halides, and where m takes on a value of 1 or 2, and where n is an integer from 1 to 8, and where R² is a hydrogen atom or an acyl group having 1 to 20 carbon atoms, and where X is an organic spacer group having 3 to 30 carbon atoms that comprises at least one organic radical selected from the group consisting of:
a) at least one allyl group and
b) at least one phenyl group which has linkages to the silicon atom of the silyl group (R¹)₃Si- and also to a sulfur atom of the Sₙ group, via an alkyl radical having 0 to 20 carbon atoms, that are arranged in 1,2-position to one another, and which may carry further substituents, and
c) at least one phenyl group which has linkages to the silicon atom of the silyl group (R¹)₃Si- and also to a sulfur atom of the Sₙ group, via an alkyl radical having 0 to 20 carbon atoms, that are arranged in 1,3-position to one another, and which may carry further substituents, and
d) at least one phenyl group which has linkages to the silicon atom of the silyl group (R¹)₃Si- and also to a sulfur atom of the Sₙ group, via an alkyl radical having 0 to 20 carbon atoms, that are arranged in 1,4-position to one another, and which additionally carries at least one further substituent,
and
e) fused aromatic ring systems which have linkages to the silicon atom of the silyl group (R¹)₃Si- and also to a sulfur atom of the Sₙ group that are arranged via an alkyl radical having 0 to 20 carbon atoms, and which may additionally carry at least one further substituent,
where "phf" denotes "parts per hundred parts of filler by weight" and is based on the silica present.

2. Sulfur-crosslinkable rubber mixture according to Claim 1, **characterized in that** the organic spacer group X is a derivative of 1-ethyl-3-methylbenzene.

3. Vehicle tyre, **characterized in that** it comprises a sulfur-crosslinkable rubber mixture according to any of the preceding claims in at least one component.

4. Vehicle tyre according to Claim 3, **characterized in that** the component is a tread.

5. Use of a rubber mixture according to either of Claims 1 and 2 in vehicle tyres for improving the handling behaviour and the properties in the tradeoff between rolling resistance versus wet grip of vehicle tyres.

## Revendications

1. Mélange de caoutchouc réticulable au soufre contenant
- au moins un caoutchouc de diène, le mélange comprenant au moins un caoutchouc de styrène-butadiène polymérisé en solution ; et
- 10 à 200 phr d'au moins une silice et
- 2 à 20 phf d'au moins un silane doté de la formule brute générale I) [(R¹)₃Si-X]ₘSₙ(R²)₂₋ₘ , les radicaux R¹ à l'intérieur d'une molécule pouvant être identiques ou différents et étant des groupes alcoxy comportant 1 à 10 atomes de carbone ou des groupes dialcoxy cycliques comportant 2 à 10 atomes de carbone ou des groupes cycloalcoxy comportant 4 à 10 atomes de carbone ou des groupes phénoxy ou des halogénures et m prenant la valeur 1 ou 2 et n étant un nombre entier de 1 à 8 et R² étant un atome d'hydrogène ou un groupe acyle comportant 1 à 20 atomes de carbone et X étant un groupe espaceur organique comportant 3 à 30 atomes de carbone qui contient au moins un radical organique qui est choisi dans le groupe constitué par :
a) au moins un groupe allyle et
b) au moins un groupe phényle dont les liens à l'atome de silicium du groupe silyle (R¹)₃Si- ainsi qu'à un atome de soufre du groupe Sₙ sont agencés en position 1,2 l'un par rapport à l'autre par l'intermédiaire d'un radical alkyle comportant 0 à 20 atomes de carbone, et qui peut porter des substituants supplémentaires, et
c) au moins un groupe phényle dont les liens à l'atome de silicium du groupe silyle (R¹)₃Si- ainsi qu'à un atome de soufre du groupe Sₙ sont agencés en position 1,3 l'un par rapport à l'autre par l'intermédiaire d'un radical alkyle comportant 0 à 20 atomes de carbone, et qui peut porter des substituants supplémentaires, et
d) au moins un groupe phényle dont les liens à l'atome de silicium du groupe silyle (R¹)₃Si- ainsi qu'à un atome de soufre du groupe Sₙ sont disposés en position 1,4 l'un par rapport à l'autre par l'intermédiaire d'un radical alkyle comportant 0 à 20 atomes de carbone, et qui porte en outre au moins un substituant supplémentaire, et
e) des systèmes cycliques aromatiques condensés, dont les liens à l'atome de silicium du groupe silyle (R¹)₃Si- ainsi qu'à un atome de soufre du groupe Sₙ sont disposés par l'intermédiaire d'un radical alkyle comportant 0 à 20 atomes de carbone, et qui de plus peuvent porter au moins un substituant supplémentaire,
« phf » signifiant « parties par cent parties de charge en poids » et se rapportant à la silice présente.

2. Mélange de caoutchouc réticulable au soufre selon la revendication 1, **caractérisé en ce que** le groupe espaceur organique X est un dérivé de 1-éthyl-3-méthyl-benzène.

3. Pneumatique pour véhicule, **caractérisé en ce qu'**il contient un mélange de caoutchouc réticulable au soufre selon l'une quelconque des revendications précédentes dans au moins un composant.

4. Pneumatique pour véhicule selon la revendication 3, **caractérisé en ce que** le composant est une bande de roulement.

5. Utilisation d'un mélange de caoutchouc selon l'une quelconque des revendications 1 ou 2 dans des pneumatiques pour véhicule pour l'amélioration de la tenue de route et des propriétés dans le compromis entre résistance au roulement et adhérence sur sol humide de pneumatiques pour véhicule.
